# EUROPÄISCHE PATENTSCHRIFT

(11) **EP 1 277 563 B1**
(45) Veröffentlichungstag und Bekanntmachung des Hinweises auf die Patenterteilung: **07.09.2005**
(21) Anmeldenummer: 02015837.4
(22) Anmeldetag: 16.07.2002
(51) Int. Cl.: B29C 70/44

(54) **Verfahren und Vorrichtung zur Herstellung von Formkörpern**
Method and apparatus for manufacturing moulded bodies
Procédé et dispositif pour la fabrication des corps moulés

(30) Priorität: 18.07.2001 DE 10134253; 22.10.2001 DE 10151359
(43) Veröffentlichungstag der Anmeldung: 22.01.2003
(73) Patentinhaber: Wenderoth, Klaus, Dr.-Ing., 88697 Bermatingen (DE)
(72) Erfinder: Wenderoth, Klaus, Dr.-Ing., 88697 Bermatingen (DE); Bachmann, Andreas, Dipl.-Ing., 88045 Friedrichshafen (DE); Lehr, Heiko, Dipl.-Ing., 88045 Friedrichshafen (DE)
(74) Vertreter: Otten, Herbert

(56) Entgegenhaltungen:
- WO-A-00/46015
- WO-A-02/02299
- GB-A- 2 267 457
- US-A- 4 209 482
- US-A- 6 149 844

## Beschreibung

Das Harzinjektionsverfahren bzw. RTM-Verfahren (Resin Transfer Molding) ist ein Prozess zur Herstellung von Bauteilen aus Faserverbundwerkstoffen. Bei diesem Prozess wird eine Form mit Verstärkungsmaterial ausgelegt und anschließend das noch flüssige Harz in die mit Fasermaterial ausgefüllte Form injiziert.

Bei herkömmlichen Verfahren besteht das Werkzeug entweder aus zwei massiven Hälften oder aus einer massiven Hälfte und einer elastischen Hälfte, wie es zum Beispiel beim DP-RTM-Verfahren der Fall ist. Zudem müssen für Bauteile mit Hinterschnitten Werkzeuge mit Schieberelementen hergestellt werden, damit das fertige Bauteil entformbar ist. Dies ist wegen der geringen Harzviskosität mit Schwierigkeiten hinsichtlich der Seriensicherheit behaftet. Nachdem das Werkzeug, das sich entweder in einer Presse oder in einem Autoklaven befindet, geschlossen ist, wird das Harz in die Kavität injiziert. Nachteilig ist, dass um Lufteinschlüssen vorzubeugen und um eine hohe Qualität der Oberfläche zu erzielen, sehr hohe Drücke notwendig sind. Weiterhin kann bei dieser Vorgehensweise lediglich ein Bauteil pro Zyklus gefertigt werden. Die Zykluszeit pro Bauteil beträgt bei dem heutigen Stand unter Verwendung gängiger Harzsysteme etwa 20 bis 45 Minuten. Beim Präparieren der Kavität, wie Säubern und Trennmittel auftragen, sind keine großen Zeitersparnisse zu erwarten. Dies gilt auch für das Beschicken der Kavität, welches das Einlegen des Verstärkungsmaterials ins Werkzeug beinhaltet. Der Nachteil der herkömmlichen RTM-Verfahren ist, dass diese Arbeitsgänge sequentiell an einem Werkzeug durchgeführt werden müssen, wodurch die Taktzeit erheblich eingeschränkt wird. Die neue Erfindung kann diese Nachteile beseitigen.

Aus der WO 00/46015 A1 ist ein Verfahren zur Harzimprägnierung von verstärkten Materialien bekannt, mit welchem ein Formkörper zwischen einer festen Form und einem durch eine dichte Folie abgetrennten Fluid herstellbar ist. Dieses Verfahren weist die oben genannten Nachteile auf.

Der Erfindung liegt die Aufgabe zugrunde, ein Verfahren und eine Vorrichtung zu entwickeln, die es erlauben, mit einem geringen maschinellen Aufwand Bauteile aus Faserverbundwerkstoff herzustellen, die eine glatte Oberfläche ohne offene Lufteinschlüsse aufweisen.

Weiterhin ist es Ziel dieser Erfindung, das bekannte RTM-Verfahren so weiter zu entwickeln, dass man in der Lage ist, mehrere Bauteile auf einmal zu fertigen, ohne dabei sehr hohe Investitionen für teure Hydraulikpressen oder Autoklaven tätigen zu müssen und Bauteile mit Hinterschnitten ohne kostspielige Schieberwerkzeuge fertigen zu können.

Diese Aufgabe wird durch die kennzeichnenden Merkmale des Verfahrensanspruchs 1 und des Sachanspruchs 18 gelöst. In den Unteransprüchen sind vorteilhafte und zweckmäßige Weiterbildungen angegeben.

Das erfindungsgemäße Verfahren sieht vor, ein Gießmittel, wie z.B. Harz oder Kunststoff, in einen Hohlkörper einzuspritzen und während des Einspritzvorgangs und/oder danach von außen durch ein flüssiges Druckmedium einen Druck auf den Hohlkörper bzw. den im Hohlkörper herzustellenden Gegenstand auszuüben. Bei einem derartigen Verfahren wird der formgebende Hohlkörper durch das flüssige Druckmedium stabilisiert, d. h. der Hohlkörper kann gegenüber herkömmlichen Formen zur Herstellung von Bauteilen eine geringere Stabilität aufweisen und somit kostengünstiger hergestellt werden. Weiterhin ist es durch den nach dem Einspritzvorgang auf den Hohlkörper bzw. das darin eingeschlossene Bauteil wirkenden Druck möglich, die Qualität des Bauteils zu erhöhen. Bei Versuchen wurde festgestellt, dass im Bauteil eingeschlossene Luftblasen dazu neigen, nach dem Einspritzen von Bauteilrand zur Bauteilmitte zu wandern und dass ihr Volumen sich verringert. Eine Erklärung für das Phänomen der Wanderbewegung wird darin gesehen, dass die Luftblasen sich in Ausbreitungsrichtung der auf das Bauteil wirkenden Druckwelle bewegen. Eine Erklärung für das Phänomen des Verkleinerns der Bläschen wird in der Einwirkung des Drucks des flüssigen Druckmediums auf das noch nicht verfestigte Bauteil gesehen. Beide Phänomene führen zu einer erheblichen Verbesserung der Oberflächenqualität der mit diesem Verfahren hergestellten Bauteile, da die Oberfläche frei von offenen in das Bauteil hineinragenden Blasen und frei von unmittelbar unter der Oberfläche des Bauteils liegenden Blasen ist, so dass die Oberfläche nicht zur Aufnahme von Verschmutzungen neigt und ohne das Auftreten von Oberflächenstörungen lackiert oder beschichtet werden kann. Hierdurch sind die nach dem erfindungsgemäßen Verfahren hergestellten Bauteile optimal für den Einsatz in der Kfz-Industrie und anderen Bereichen mit hohen Oberflächenanforderungen geeignet. Durch den allseitig auf die Form wirkenden Druck ist eine Stabilisierung des Bauteils und der Form von allen Seiten sichergestellt.

Erfindungsgemäß ist es vorgesehen, den Druck der Flüssigkeit nach dem Einspritzen zu erhöhen. Zu diesem Zeitpunkt hat die Form eine erhöhte Stabilität erreicht, da diese durch das in ihr befindliche nur wenig kompressible Gießmaterial vor dem Einknicken geschützt ist. Die Druckerhöhung wirkt sich unmittelbar formgebend und druckerhöhend auf das in der Form befindliche Gießmaterial aus und bewirkt so die oben beschriebene Qualitätserhöhung.

Der Begriff Harz ist als Oberbegriff für alle Materialien, die durch eine Temperaturerhöhung verflüssigt werden können (Thermoplaste) oder die durch Mischung reaktiver Bestandteile zu einem fertigen Produkt reagieren (Duroplast) zu verstehen. Die Begriffe Gießmaterial und Gießmittel finden als Synonyme für den Begriff Harz Verwendung. Der Begriff Matrix kommt als Synonym zu dem Begriff Harz zum Einsatz, wenn zusätzlich mit dem Harz Verstärkungsfasern oder Verstärkungsstrukturen zum Einsatz kommen und vorzugsweise im fertigen Produkt in das Harz eingebunden sind. Aus fertigungstechnischer Sicht ist ein Harz somit ein Stoff, der zunächst in einem flüssigen bzw. zähflüssigen bzw. formbaren Zustand vorliegt und danach in der Form erhärtet oder aushärtet.

Eine Ausführungsvariante sieht vor, den Druck des Druckmediums von etwa 1 bar auf etwa 5 bis 30 bar zu erhöhen. Dies führt zu einer hohen Qualität der Bauteile, ohne die Form zu hoch zu belasten.

Besonders vorteilhaft ist es, wenn der erhöhte Druck etwa für die Aushärtzeit des Gießmittels besteht, da dann die durch den erhöhten Druck ausgelösten Veränderungen im Bauteil praktisch eingefroren werden, weil das Bauteil nach dem Aushärten seine Form und seine Eigenschaften durch innere, eigene Kräfte hält.

Weiterhin sieht das erfindungsgemäße Verfahren vor, den Druck nach dem Aushärten des Gießmittels auf den Ausgangsdruck oder einen darunter liegenden Druck zurückzufahren. Hierdurch ist eine gefahrlose Entnahme der Bauteile bzw. Formen aus dem Druckmedium möglich, weiterhin kann bei diesem Druck eine erneute Bestückung des Druckmediums erfolgen.

Vorteilhafterweise wird der Druck durch Wasser erzeugt. Dieses steht kostengünstig zur Verfügung.

Insbesondere ist ein Höchstdruck von etwa 15 bis 30 bar vorgesehen, da bei diesem gute Qualitäten der Oberfläche und gute sonstige Bauteileigenschaften bei mäßigem Energieverbrauch realisierbar sind.

Weiterhin ist es vorteilhaft, das Harz mit einem Druck von etwa 1 bar in den Innenraum der Form zu pressen, insbesondere wenn das Druckmedium ebenfalls einen Druck von etwa 1 bar aufweist, da sich dann die von außen und von innen auf die Form wirkenden Drücke nahezu ausgleichen und die Einströmgeschwindigkeit des Harzes so niedrig ist, dass die in der Form befindliche Luft kontrolliert entweichen kann.

Weiterhin ist es vorteilhaft, das Harz insbesondere in einem unteren Bereich der Form einzuspritzen. Hierdurch ist ein langsames Entweichen der Luft aus dem Innenraum der Form möglich, ohne dass die Gefahr von größeren Lufteinschlüssen besteht, da das Gießmittel wie in einer Röhre aufsteigt und die Luft vor sich herschiebt.

Eine vorteilhafte Ausführungsvariante des erfindungsgemäßen Verfahrens sieht vor, mehrere Bauteile gleichzeitig oder nacheinander mit Gießmittel zu füllen. Hierdurch können mehrer Bauteile in einem Behälter parallel hergestellt werden.

Die Erfindung sieht weiterhin vor, die Form vor dem Einspritzen mit Fasern und/oder Fasermatten und/oder Fasernetzen und/oder Faserkörpern auszulegen. Hierdurch ist es möglich, mit dem Verfahren ein Bauteil aus Faserverbundwerkstoff herzustellen.

Eine Vorrichtung zur Durchführung des Verfahrens sieht vor, die Oberschale und/oder die Unterschale der Form aus einem elastischen bzw. verformbaren Material, insbesondere Kunststoff oder Metall, herzustellen, wobei die Form vorzugsweise nach oben gerichtet in einem Druckbehälter mittels einer Flüssigkeit mit Druck beaufschlagbar ist.

Durch den Einsatz einer Vorrichtung, bei der die Oberschale und/oder die Unterschale der Form jeweils aus wenigstens zwei Schalenteilen bestehen, welche durch Dichtungen gegeneinander abgedichtet sind, ist es möglich, auch komplizierte Bauteile mit Hinterschneidungen herzustellen.

Kennzeichnend für die Erfindung ist auch, dass nicht nur eine Form sondern mehrere Formen gleichzeitig mit Harz injiziert werden können, um damit die Zykluszeit pro Bauteil enorm zu reduzieren. Bei den gängigen RTM-Verfahren ist es bisher nicht möglich, mehrere Kavitäten auf einmal zu füllen. Die Formschalen sind dabei senkrecht angeordnet. Weiterhin können durch aus mehr als zwei Hälften bestehende Formen, bei denen durch sogenannte Dichtungskreuzungen mehrere Teile zu einer Werkzeugschale zusammengesetzt sind, hinterschnittige Bauteile hergestellt werden.

Die Formhälften sind sowohl auf der Vorder- als auch auf der Rückseite der Form elastisch ausgelegt. Die elastisch verformbaren Werkzeugschalen befinden sich bei der Injektion in einem Druckbehälter, wobei die Formen komplett mit Wasser oder einer anderen geeigneten Flüssigkeit umschlossen sind. Die Formhälften sind so ausgelegt, dass weder Flüssigkeit nach innen eindringen, noch das Harzgemisch aus der Form austreten kann.

Im Gegensatz zu den bisher bekannten Verfahren befinden sich bei dem erfindungsgemäßen Verfahren bzw. der erfindungsgemäßen Vorrichtung die Formen in vertikaler Lage und sind komplett mit Wasser oder anderen geeigneten Flüssigkeiten umgeben. Ein weiterer Unterschied gegenüber den bestehenden Verfahren ist, dass das Harz an den Unterseiten einer der Formhälften injiziert wird und nach oben steigt. Dies hat den Vorteil, dass das Harz langsam durch das in die Form eingelegte Verstärkungsmaterial nach oben zu der an der Oberseite der Form angebrachten Entlüftung steigt und somit eine gleichmäßige und kontinuierliche Füllung der Formen gewährleistet. Während der Füllung befindet sich der Korb, in dem je nach Bauteilgröße beliebig viele, getrennt angeordnete Formen angeschlossen werden können, in einem Druckkessel in der Flüssigkeit. Die Flüssigkeit, auf welche während der Injektion ein geringfügig höherer Druck als der Injektionsdruck ausgeübt wird, gewährleistet neben den Stahlklammern, welche rund um jede Form angebracht sind, dass die Formen sich durch den Injektionsdruck nicht öffnen können und das Harz aus der Form austritt.

Die erfindungsgemäße Vorrichtung schafft die Voraussetzung dafür, dass das neue Verfahren durchgeführt werden kann.

Durch das neue Verfahren erreicht man eine Steigerung der Produktionsgeschwindigkeit, da je nach Größe beliebig viele Teile gleichzeitig hergestellt werden können. Die erforderliche Temperatur- und Druckführung wird direkt über die im Druckbehälter befindliche Flüssigkeit gesteuert, womit ein spontaner und gezielter Eingriff auf den Prozess und somit eine genaue Steuerung der Injektion gewährleistet ist. Durch die über die Flüssigkeit geleitete Drucksteuerung kann ebenfalls auf einen eventuell während der Injektion entstehenden Druckabfall schnell reagiert werden, was bei einem Autoklaven oder einer Presse nicht der Fall ist.

Da bei diesem Verfahren Druckbehälter statt teurer Hydraulikpressen verwendet werden, sind die Investitionskosten weitaus geringer als bei den herkömmlichen Verfahren. Ebenso ist das Herstellen der Werkzeugformen bei weitem günstiger, da alle Werkzeugformteile insbesondere aus einem elastischen Laminat bestehen, statt aus einer oder zwei massiven Werkzeughälften.

Ein weiterer großer Vorteil gegenüber herkömmlichen Verfahren ist, dass die Formen komplett elastisch ausgelegt sind. Hierdurch ist es möglich, durch eine Druckerhöhung über die formenumgebende Flüssigkeit, die Poren und die nahe der Bauteiloberfläche befindlichen Lufteinschlüsse nach innen zu drücken, um somit eine sehr gute Oberflächenqualität erzielen. Durch die Tatsache, dass der Druck an allen Stellen des Bauteils etwa gleich stark wirkt, erhält man auch eine sehr gleichmäßige Materialverteilung im Bauteil sowie eine sehr hohe Seriensicherheit.

Weiterhin ist es vorteilhaft, wenn das Druckmedium im Druckbehälter verbleibt. Hierdurch kann das Druckmedium wiederverwendet werden und geht nicht wie beim Autoklaven verloren.

Weitere Einzelheiten der Erfindung werden in der Zeichnung anhand von schematisch dargestellten Ausführungsbeispielen beschrieben.

Hierbei zeigt:
- Figur 1: eine schematische Seitenansicht einer erfindungsgemäßen Form,
- Figur 2: eine schematische Seitenansicht eines Druckbehälters, der fünf Formen aufnimmt,
- Figur 3: eine schematische, geschnittene Teilansicht eines Formkörpers,
- Figur 4: eine perspektivische Ansicht einer weiteren Form,
- Figur 5: eine perspektivische Ansicht einer Form für einen Formkörper mit Hinterschneidung und
- Figur 6: ein Schaubild für den Druckverlauf in Abhängigkeit von der Zeit während des Herstellungsprozesses.

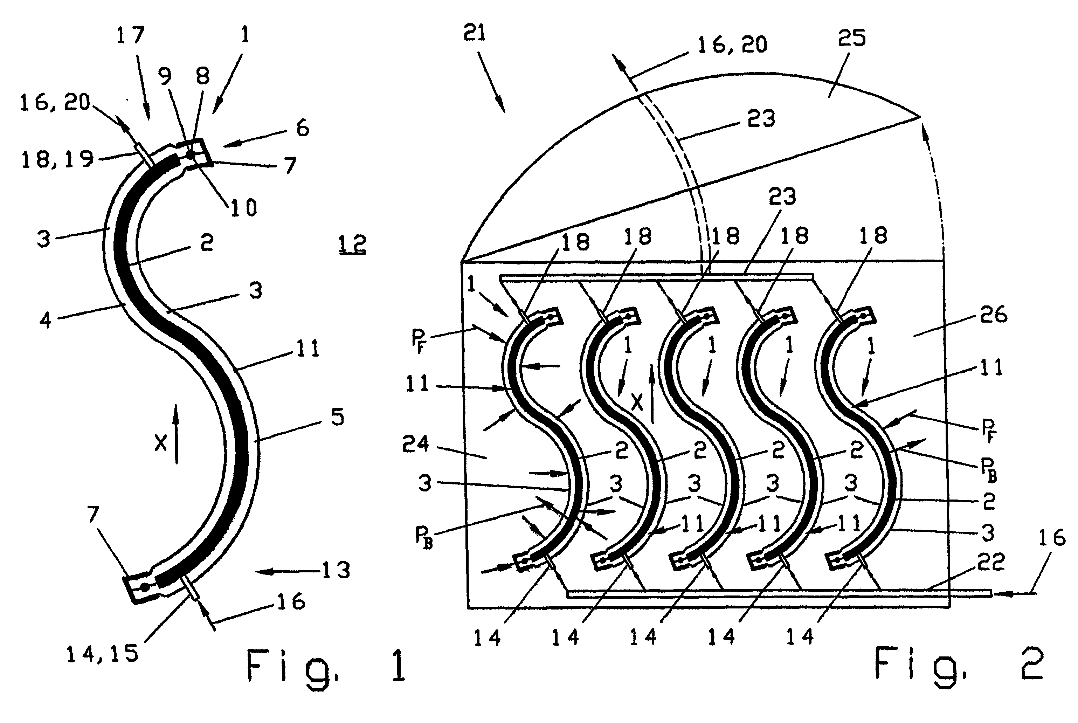

In Figur 1 ist eine Form 1 für ein flächiges Bauteil bzw. einen flächigen Formkörper 2 aus Faserverbundwerkstoff dargestellt. Die Form 1 besteht im Wesentlichen aus zwei Schalen 3, die durch eine Oberschale 4 und eine Unterschale 5 gebildet sind. Die Schalen 3 sind an einem umlaufenden Rand 6 durch Klammern 7 zusammengehalten. Eine ringförmige Dichtung 8, die zwischen Nuten 9, 10 der Schalen 3 angeordnet ist, dichtet einen Innenraum bzw. eine Kavität 11 der Form 1 gegenüber einer Umgebung 12 ab. In einem unteren Endbereich 13 weist die Form 1 einen Stutzen 14 auf, der als Zulauf 15 für ein Harz 16 bzw. Gießmittel (symbolisch durch einen Pfeil dargestellt) dient. In einem oberen Endbereich 17 weist die Form 1 einen weiteren Stutzen 18 auf, der als Ablauf 19 für das Harz 16 bzw. in der Form 1 vorhandene Luft 20 (symbolisch durch einen Pfeil dargestellt) dient. Beim Befüllen der Kavität 11, die zu diesem Zeitpunkt mit einem nicht dargestellten Fasermaterial, beispielsweise mit einer netzartigen Glasfibermatte ausgelegt ist, strömt das Harz 16 in Pfeilrichtung x in die Kavität und verdrängt die in der Kavität 11 eingeschlossene Luft durch den Ablauf 19 aus der Form 1. In der Kavität 11 der Form 1 liegt der Formkörper 2, der in seinen Abmessungen der Kavität 11 der Form 1 entspricht. Gemäß einer nicht dargestellten Ausführungsvariante ist es vorgesehen, die Schalen durch ein umlaufendes Halteteil zusammenzuhalten. Weiterhin ist es vorgesehen, die Schalen über Vor- und Rücksprünge an aneinander liegenden Flächen zueinander zu positionieren. Für das Zusammenhalten der Schalen sind auch Schraub- und/oder Rastmittel und/oder Spannmittel, wie insbesondere Schrauben, Haken und Spannverschlüsse vorgesehen.

In Figur 2 ist ein Druckbehälter 21 dargestellt, in dem fünf Formen 1 angeordnet sind, die der in Figur 1 dargestellten Form 1 entsprechen. Die Formen 1 sind über die Stutzen 14 an eine gemeinsame Zuleitung 22 angeschlossen, über die diese mit Harz 16 (symbolisch durch einen Pfeil dargestellt) versorgt werden können. Über die Stutzen 18 sind die Formen 1 bzw. deren Innenräume 11 in eine gemeinsame T-förmige Ableitung 23 entlüftet, durch welche Luft 20 oder Harz 16 (symbolisch durch einen Pfeil dargestellt) aus dem Druckbehälter 21 herausführbar ist. Der Druckbehälter 21 besteht aus einer Wanne 24 und einem abnehmbaren bzw. aufklappbaren Deckel 25. Die Wanne 24 kann bei geöffnetem Deckel 25 mit den Formen 1 bestückt werden, die zuvor durch Einlegen von Fasermaterial vorbereitet wurden. Ein Verbinden der Formen 1 mit den Leitungen 22, 23 kann vor und/oder nach und/oder während des Einsetzens der Formen 1 in den Druckbehälter 21 erfolgen. Der Druckbehälter ist vollständig mit einem Fluid 26 gefüllt. Die eingetauchten Formen 1 werden bei geöffnetem oder geschlossenen Deckel 25 mit Harz 16 befüllt, wobei das Harz 16 in den Innenräumen 11 der Formen 1 in Pfeilrichtung x aufsteigt und die in den Formen 1 eingeschlossene Luft 20 verdrängt und durch die Ableitung 23 aus dem Druckbehälter 21 drückt. In diesem Schritt des Befüllens der Formen 1 mit Harz 11 wirkt der Druck, mit dem das Fluid 26 auf die Formen 1 wirkt, stabilisierend auf diese. Dies ist vorteilhaft, da die Formen 1 beim Befüllen einer erhöhten Belastung unterliegen, denn das in die Formen eintretende Harz 11 neigt dazu, die Schalen 3 auseinander zu drücken. Diesem nach außen gerichteten Druck p_{B} wirkt ein gegen die Schalen 3 gerichteter Druck p_{F} des Fluids 26 entgegen. Der Druck p_{B}, mit dem das Harz 11 in die Formen 1 gespritzt wird, liegt beispielsweise bei etwa 1 bar und nimmt in Pfeilrichtung x ab. Auch der im Fluid 26 vorherrschende hydrostatische Druck p_{F} nimmt in Richtung des Pfeils x ab. Somit wirken große Drücke p_{B} gegen große Drücke p_{F} und heben sich in dem dargestellten Beispiel weitgehend gegeneinander auf. In einem zweiten Schritt, der nicht näher dargestellt ist, wird der Druck des Fluids bei geschlossenem Deckel erhöht. Durch diese Druckerhöhung wirkt das Fluids mit einem allseitigen Druck auf die Formen bzw. auf die in den Formen befindlichen Bauteile, da die Schalen ein leicht elastisches Verhalten aufweisen und eine Weitergabe bzw. Weiterleitung des Drucks an die Bauteile erlauben. Hierdurch werden im Harz eingeschlossene Luftblasen komprimiert oder geteilt und damit verkleinert. Weiterhin wurde eine Wanderbewegung der Luftblasen von der Oberfläche der Bauteile ins Innere der Bauteile beobachtet, die sich durch die Erhöhung des Druckes des Fluids einstellt.

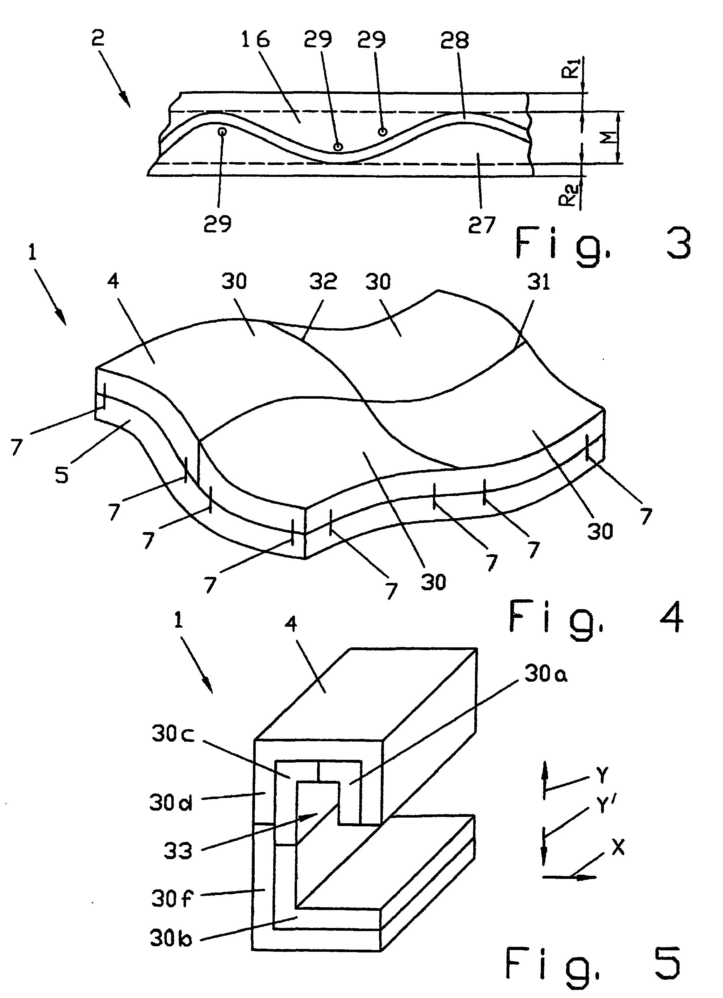

In Figur 3 ist eine geschnittene Teilansicht eines Formkörpers 2 bzw. Bauteils dargestellt. Der Formkörper besteht aus einem erhärteten Harzkörper 27 in den Fasern 28 eingebettet sind. Die Fasern 28 verlaufen wellenförmig oder gerade in einem mittleren Bereich M des Bauteils 2. Randbereiche R₁ und R₂ des Bauteils 2 sind frei von Fasern 28. Im mittleren Bereich M des Bauteils 2 befinden sich auch Luftblasen 29, die sich beim Einspritzen des Harzes gebildet haben und die während des Herstellungsprozesse des Bauteils 2 aus den Randbereichen R1, R2 in den Mittelbereich M gewandert sind und durch den auf das Bauteil 2 ausgeübten Druck komprimiert und damit im Volumen verkleinert wurden. Die Komprimierung und/oder Wanderbewegung der Luftblasen 29 im Harz 16 kann auch zu einer Teilung und/oder Verformung der Luftblasen 29 führen. Eine Teilung der Luftblasen tritt insbesondere dann auf, wenn eine Luftblase bei der Wanderbewegung im Mittelbereich M des Bauteils zwischen Fasern 28 hindurchtritt.

In Figur 4 ist eine vereinfachte, perspektivische Ansicht einer weiteren Form 1 dargestellt. Die Form 1 besteht aus einer Oberschale 4 und einer Unterschale 5. Die Oberschale 4 ist zur Vereinfachung der Handhabung der Form beim Zusammenbauen und beim Zerlegen aus vier Teilschalen 30 gebildet. Diese stoßen an Kanten 31, 32 aneinander und sind gegeneinander durch nicht dargestellte Dichtungen abgedichtet, um ein Austreten des flüssigen Harzes beim Einspritzvorgang und während der Aushärtung zu vermeiden. Die Oberschale 4 und die Unterschale 5 sind über Klammern 7, die in die Form eingreifen, zueinander fixiert.

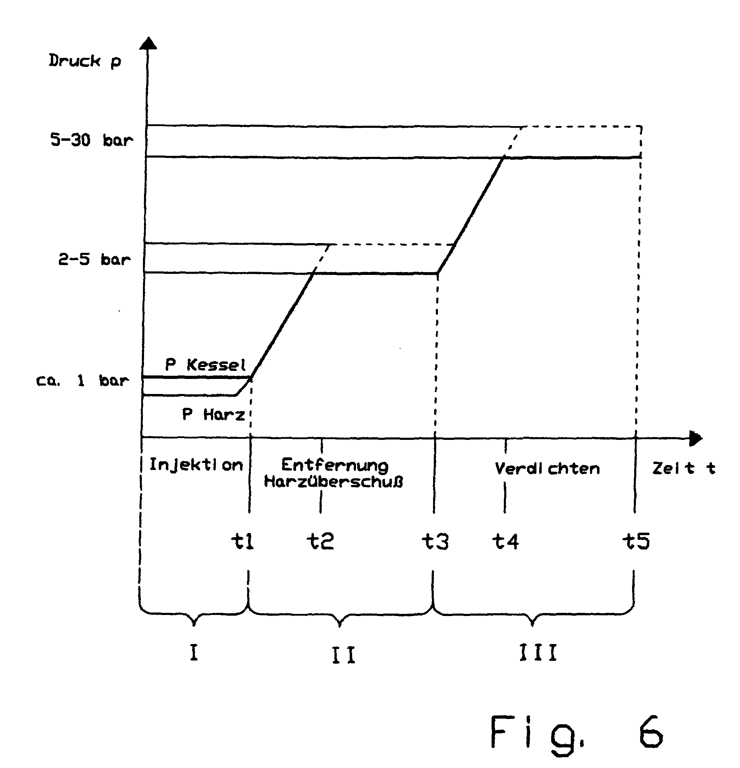

In Figur 5 ist eine weitere Form 1 für einen Formkörper mit einer Hinterschneidung 33 dargestellt. Eine Oberschale 4 dieser Form 1 ist zweiteilig ausgeführt und eine Unterschale 5 dieser Form 1 ist dreiteilig ausgeführt, um eine Entformung zu ermöglichen. Zur Entformung sind zunächst Teilschalen 30a, 30b der Unterschale 5 in Pfeilrichtungen y' bzw. x zu entnehmen. Danach kann eine dritte Teilschale 30c der Unterschale 5 entnommen werden. Nach einem Auseinanderziehen der Teilschalen 30d und 30f der Oberschale 4 in Pfeilrichtungen y, y' ist dann das nicht dargestellte Bauteil freigegeben.

In Figur 6 ist ein Schaubild dargestellt, welches den Druckverlauf in Abhängigkeit von der Zeit während des Herstellungsprozesses des Bauteils zeigt. Während einer Einspritzphase I wird das Harz mit einem im Bereich von 0,8 bar bis 1 bar liegenden Druck p_{B} in die vorgeformte Form eingespritzt. Während dieser Zeitspanne von t₀ bis t₁ wird das die Form umgebende Druckmedium auf einem entsprechenden Druck p_{F} gehalten. Nach Abschluss der Einspritzphase wird das eingespritzte Harz über den Zulauf nicht weiter mit Druck beaufschlagt. Nunmehr ist aus der Schale über den Zulauf das Entweichen von Luft und/oder überschüssigem Harz möglich und im Druckbehälter befindet sich ein geschlossenes System. Das Entweichen wird durch einer Erhöhung des Drucks p_{F} des Fluids bewirkt, wobei der Druck p_{F} des Fluids während der Phase II in einer Zeitspanne von t₁ bis t₂ auf etwa 2 bar bis 5 bar erhöht wird und in einer Zeitspanne von t₂ bis t₃ auf diesem Niveau gehalten wird. Der Phase II folgt eine Verdichtungsphase III, bei der in einem Zeitraum von t₃ bis t₄ eine Erhöhung des Drucks p_{F} des Fluids auf etwa 5 bar bis 30 bar erfolgt. Dieser Druck wird anschließend für eine Zeitspanne von t₄ bis t₅ beibehalten. Nach Abschluss der Verdichtungsphase III bzw. nach dem Aushärten des Harzes wird der Druck p_{F} wieder abgesenkt, damit der Druckbehälter geöffnet werden kann und das Bauteil aus der Form herausgenommen werden kann. Für die Verdichtungsphase III ist es in Abhängigkeit von den Kenngrößen des verwendeten Harzes auch vorgesehen, den in der Phase II erreichten Maximaldruck beizubehalten, sofern dieser für eine Verdichtung des Harzes ausreichend ist. Die Dauer der einzelnen Phasen I, II, III ist stark abhängig von den Eigenschaften des verwendeten Harzes und der Geometrie der Form. Bei einem schnell aushärtenden Harz sind die einzelnen Phasen kürzer als bei einem langsam aushärtenden Harz.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, die Formen durch die Formen wenigstens teilweise umgreifende Gitterstrukturen zu stabilisieren. Weiterhin ist es vorgesehen, die Formen aus mehr als zwei Schalen aufzubauen und so ein Entformen von Hinterschneidungen zu ermöglichen.

Weiterhin ist es durch eine rundum flexibel ausgestattete Negativformen möglich, über die Flüssigkeit auf alle Seiten der Form gleichzeitig und gleichmäßig Druck auszuüben.

Dadurch können sehr gute Qualitäten der Bauteiloberflächen und eine hohe Prozesssicherheit gewährleistet werden. Ebenso kann somit ein Druckabfall über die gesamte Injektionslänge verhindert werden. Die Erfindung sieht die Herstellung von Formkörpern aus Faserverbundwerkstoff und die Herstellung von Formkörpern aus einem Werkstoff ohne verstärkende Einlagen vor.

Gemäß einer Ausführungsvariante der Erfindung ist es auch vorgesehen, eine Form mit mehreren Kavitäten auszubilden. Eine derartige Form besteht beispielsweise aus drei Schalen, einer linken Schale, einer Mittelschale und einer rechten Schale. Hierbei ist zwischen der linken Schale und der Mittelschale und zwischen der rechten Schale und der Mittelschale ein Innenraum für die Herstellung eines Bauteils ausgebildet. Auf diese Weise ist eine besonders platzsparende Herstellung von mehreren Bauteilen möglich, wobei der von rechts bzw. links wirkende Druck von der Mittelschale als Gegendruck zurückgegeben wird. Weiterhin ist ein Form mit mehreren Kavitäten vorgesehen, bei der die Kavitäten zwischen einer Oberschale und einer Unterschale ausgebildet sind. Bei einer solchen Form liegen nach dem Entformen zum Beispiel mehrere gleiche Bauteile oder verschieden Bauteile vor. Eine Verwendung derartiger Formen ist insbesondere bei kleinen Bauteilen sinnvoll, um den in einem Druckbehälter vorhandenen Raum optimal auszunutzen. Auch die Verwendung einer derartigen Form zur Herstellung eines aus mehreren Einzelbauteilen bestehenden Gesamtbauteils ist sinnvoll, da dann die Einzelbauteile unter gleichen Bedingungen hergestellt sind und somit nahezu gleiche Qualitäten aufweisen.

### Bezugszeichenliste:

- 1: Form
- 2: Bauteil / Formkörper
- 3: Schale
- 4: Oberschale
- 5: Unterschale
- 6: Rand
- 7: Klammer
- 8: Dichtung
- 9: Nut
- 10: Nut
- 11: Innenraum / Kavität
- 12: Umgebung
- 13: Endbereich
- 14: Stutzen
- 15: Zulauf
- 16: Harz / Matrix / Gießmittel
- 17: Endbereich
- 18: Stutzen
- 19: Ablauf
- 20: Luft
- 21: Druckbehälter
- 22: Zuleitung
- 23: Ableitung
- 24: Wanne
- 25: Deckel
- 26: Fluid / Druckmedium
- 27: Harzkörper
- 28: Faser
- 29: Luftblase
- 30: Teilschale
- 30a - 30f: Teilschale
- 31: Kante
- 32: Kante
- 33: Hinterschneidung

## Patentansprüche

1. Verfahren zur Herstellung von Formkörpern (2), wobei ein Harz bzw. Gießmittel (16) in eine Form (1) eingespritzt wird und während des Einspritzvorgangs und/oder danach von außen ein Druck (p_{F}) durch ein flüssiges Druckmedium (26) auf die Form (1) bzw. den in der Form (1) herzustellenden Formkörper (2) einwirkt, **dadurch gekennzeichnet, dass** der Druck (p_{F}) allseitig auf die Form (1) wirkt und das Druckmedium (26) die Form (1) vollständig umgibt.

2. Verfahren nach einem der vorhergehenden Ansprüche, **dadurch gekennzeichnet, dass** der Druck (p_{F}), insbesondere nach dem Einspritzvorgang, erhöht wird.

3. Verfahren nach einem der vorhergehenden Ansprüche, **dadurch gekennzeichnet, dass** der Druck (p_{F}) von einem Ausgangsdruck von etwa 1 bar auf einen erhöhten Druck von etwa 5 bis 30 bar erhöht wird.

4. Verfahren nach einem der vorhergehenden Ansprüche, **dadurch gekennzeichnet, dass** der Druck (p_{F}) von einem Ausgangsdruck von etwa 1 bar auf einen erhöhten Druck bis ca. 30 bar erhöht wird, in Abhängigkeit von der Bauteilgeometrie und der Werkzeugsteifigkeit, wobei die Druckerhöhung vorzugsweise in wenigstens zwei Stufen (I, II, III) erfolgt und eine Stufe (II) umfasst, in welcher das überschüssige Harz entfernt wird.

5. Verfahren nach einem der vorhergehenden Ansprüche, **dadurch gekennzeichnet, dass** der erhöhte Druck etwa für die Aushärtzeit des Gießmittels (16) gehalten wird.

6. Verfahren nach einem der vorhergehenden Ansprüche, **dadurch gekennzeichnet, dass** der Druck (p_{F}) nach dem Aushärten des Gießmittels (16) auf den Ausgangsdruck zurückgefahren wird.

7. Verfahren nach einem der vorhergehenden Ansprüche, **dadurch gekennzeichnet, dass** der Druck (p_{F}) insbesondere durch Wasser oder Öl oder Gel oder Lauge oder Säure erzeugt wird.

8. Verfahren nach einem der vorhergehenden Ansprüche, **dadurch gekennzeichnet, dass** der vom Druckmedium (26) erzeugte Druck (p_{F}) insbesondere bis auf etwa 15 bis 30 bar gefahren wird.

9. Verfahren nach einem der vorhergehenden Ansprüche, **dadurch gekennzeichnet, dass** das Bindemittel (16), insbesondere mit einem Druck (p_{B}) von etwa 1 bar, in einen Innenraum (11) der Form (1) eingespritzt wird.

10. Verfahren nach einem der vorhergehenden Ansprüche, **dadurch gekennzeichnet, dass** das Bindemittel (16) insbesondere in einem unteren Endbereich (13) in die Form (1) eingespritzt wird.

11. Verfahren nach einem der vorhergehenden Ansprüche, **dadurch gekennzeichnet, dass** mehrere Kavitäten (11) bzw. Bauteile (2) gleichzeitig oder nacheinander injiziert werden und diese sich dabei vorzugsweise in vertikaler Stellung, komplett von einer Flüssigkeit (26) umgeben in einem Druckbehälter (21) befinden, welcher bei der Injektion einen geringfügig höheren Druck (p_{F}) aufweist als der Injektionsdruck (p_{B}).

12. Verfahren nach einem der vorhergehenden Ansprüche, **dadurch gekennzeichnet, dass** der Injektionspunkt vorzugsweise am unteren Ende (13) der Vorder- oder Rückseiten der Formen (1) angebracht ist und das Harz (16) von unten nach oben in Richtung (x) der angebrachten Entlüftungen steigt.

13. Verfahren nach einem der vorhergehenden Ansprüche, **dadurch gekennzeichnet, dass** das Druckmedium (26) im Druckbehälter (21) verbleibt.

14. Verfahren nach einem der vorhergehenden Ansprüche, **dadurch gekennzeichnet, dass** vor dem Einspritzen Fasern (28) und/oder Fasermatten und/oder Fasernetze und/oder Faserkörper in die Form (1) eingelegt werden.

15. Verfahren nach einem der vorhergehenden Ansprüche, **dadurch gekennzeichnet, dass** mehrere Formen (1) in dem Druckkessel (21), insbesondere parallel zueinander angeordnet sind.

16. Verfahren nach einem der vorhergehenden Ansprüche, **dadurch gekennzeichnet, dass** vor dem Einspritzvorgang Fasern in die Form (1) eingelegt werden, um zusammen mit dem einzuspritzenden Harz (16) einen faserverstärkten Formkörper (2) zu bilden.

17. Verfahren nach einem der vorhergehenden Ansprüche, **dadurch gekennzeichnet, dass** dem Harz (16) vor oder während des Einspritzvorgangs Fasern beigemengt werden, um einen faserverstärkten Formkörper auszubilden.

18. Vorrichtung zur Durchführung des Verfahrens nach einem der vorhergehenden Ansprüche mit einem Druckbehälter (21) mit einem flüssigen Druckmedium (26) und einer im Druckbehälter (21) angeordneten Form (1), **dadurch gekennzeichnet, dass** die Oberschale (4) und/oder die Unterschale (5) der Form (1) aus einem elastischen bzw. verformbaren Material, insbesondere Kunststoff oder Metall, bestehen.

19. Vorrichtung nach Anspruch 18, **dadurch gekennzeichnet, dass** die Oberschale (4) und/oder die Unterschale (5) der Form (1) jeweils aus wenigstens einem Schalenteilen bestehen, welche durch Dichtungen gegeneinander abgedichtet sind.

20. Vorrichtung nach einem der Ansprüche 18 bis 19, **dadurch gekennzeichnet, dass** die Form (1) im Druckmedium (26) im Wesentlichen senkrecht ausgerichtet ist.

## Claims

1. Method for producing moulded bodies (2), wherein a resin or casting means (16) is injected into a mould (1), and a pressure (p_{F}) owimg to a liquid pressure medium (26) acts from outside during the injection process and/or thereafter on the mould (1) or the moulded body (2) to be produced in the mould (1), **characterised in that** the pressure (p_{F}) acts on all sides on the mould (1) and the pressure medium (26) completely surrounds the mould (1).

2. Method according to any one of the preceding claims, **characterised in that** the pressure (p_{F}) is increased, in particular after the injection process.

3. Method according to any one of the preceding claims, **characterised in that** the pressure (p_{F}) is increased from a starting pressure of about 1 bar to an increased pressure of about 5 to 30 bar.

4. Method according to any one of the preceding claims, **characterised in that** the pressure (p_{F}) is increased from a starting pressure of about 1 bar to an increased pressure up to about 30 bar, as a function of the component geometry and the mould stiffness, wherein the pressure increase preferably takes place in at least two stages (I, II, III) and comprises a stage (II) in which the excess resin is removed.

5. Method according to any one of the preceding claims, **characterised in that** the increased pressure is maintained approximately for the curing time of the casting means (16).

6. Method according to any one of the preceding claims, **characterised in that** the pressure (pp) is returned to the starting pressure after curing of the casting means (16).

7. Method according to any one of the preceding claims, **characterised in that** the pressure (p_{F}) is generated, in particular by water or oil or gel or lye or acid.

8. Method according to any one of the preceding claims, **characterised in that** the pressure (p_{F}) generated by the pressure medium (26), is driven, in particular up to about 15 to 30 bar.

9. Method according to any one of the preceding claims, **characterised in that** the binder (16), is injected in particular at a pressure (p_{B}) of about 1 bar, into an interior (11) of the mould (1).

10. Method according to any one of the preceding claims, **characterised in that** the binder (16), is injected into the mould (1), in particular in a lower end region (13).

11. Method according to any one of the preceding claims, **characterised in that** a plurality of cavities (11) or components (2) are injected simultaneously or one after the other and these are located in the process in a pressure container (21), preferably in a vertical position, completely surrounded by a liquid (26), which pressure container during the injection has a slightly higher pressure (p_{F}) than the injection pressure (p_{B}).

12. Method according to any one of the preceding claims, **characterised in that** the injection point is preferably provided at the lower end (13) of the front or rear side of the moulds (1) and the resin (16) rises upwardly from the bottom in the direction (x) of the provided vents.

13. Method according to any one of the preceding claims, **characterised in that** the pressure medium (26) remains in the pressure container (21).

14. Method according to any one of the preceding claims, **characterised in that** fibres (28) and/or fibre mats and/or fibre nets and/or fibre bodies are placed in the mould (1) before the injection.

15. Method according to any one of the preceding claims, **characterised in that** a plurality of moulds (1) are arranged, in particular parallel to one another, in the pressure boiler (21).

16. Method according to any one of the preceding claims, **characterised in that** fibres are places in the mould (1) before the injection process in order to form a fibre-reinforced moulded body together with the injected resin (16).

17. Method according to any one of the preceding claims, **characterised in that** fibres are added to the resin (16) before or during the injection process in order to form a fibre-reinforced moulded body.

18. Method for carrying out the method according to any one of the preceding claims, with a pressure container (21) with a liquid pressure medium (26) and a mould (1) arranged in the pressure container (21), **characterised in that** the upper shell (4) and/or the lower shell (5) of the mould (1) consist of an elastic or deformable material, in particular plastics material or metal.

19. Device according to claim 18, **characterised in that** the upper shell (4) and/or the lower shell (5) of the mould (1) consist in each case of at least one shell part, which shell parts are sealed with respect to one another by seals.

20. Device according to any one of claims 18 to 19, **characterised in that** the mould (1) in the pressure medium (26) is substantially perpendicularly oriented.

## Revendications

1. Procédé de fabrication de pièce moulée (2) selon lequel on injecte une résine ou un agent de coulée (16) dans un moule (1) et pendant l'opération d'injection et/ou après celle-ci on exerce de l'extérieur une pression (p_{F}) à l'aide d'un milieu de pression liquide (26) sur le moule (1) ou la pièce moulée (2) réalisée dans le moule (1),
**caractérisé en ce que**
la pression (p_{F}) agit de tous côtés sur le moule (1) et le milieu de pression (26) entoure complètement le moule (1).

2. Procédé selon la revendication 1,
**caractérisé en ce qu'**
on augmente la pression (p_{F}) notamment après l'opération d'injection.

3. Procédé selon l'une des revendications précédentes,
**caractérisé en ce qu'**
on augment la pression (p_{F}) à partir d'une pression de départ de l'ordre de 1 bar à une pression supérieure de l'ordre de 5 à 30 bars.

4. Procédé selon l'une des revendications précédentes,
**caractérisé en ce qu'**
on augmente la pression (p_{F}) à partir d'une pression initiale de l'ordre de 1 bar à une pression augmentée allant jusqu'à environ 30 bars, en fonction de la géométrie de la pièce et de la rigidité de l'outil, l'augmentation de pression se faisant de préférence en au moins deux étapes (I, II, III), dont une étape (II) au cours de laquelle on enlève la résine en excédent.

5. Procédé selon l'une des revendications précédentes,
**caractérisé en ce qu'**
on maintient la pression élevée sensiblement pendant la durée de prise de l'agent de coulée (16).

6. Procédé selon l'une quelconque des revendications précédentes,
**caractérisé en ce qu'**
après la prise de l'agent de coulée (16) on ramène la pression (p_{F}) à la pression initiale.

7. Procédé selon l'une des revendications précédentes,
**caractérisé en ce que**
la pression (p_{F}) est obtenue notamment avec de l'eau ou de l'huile ou un gel ou une lessive ou un acide.

8. Procédé selon l'une des revendications précédentes,
**caractérisé en ce qu'**
on fait passer la pression (p_{F}) engendrée par le moyen de pression (26) notamment jusqu'à environ 15-30 bars.

9. Procédé selon l'une quelconque des revendications précédentes,
**caractérisé en ce que**
le liant (16) est injecté notamment à une pression (p_{B}) d'environ 1 bar dans une cavité (11) du moule (1).

10. Procédé selon l'une quelconque des revendications précédentes,
**caractérisé en ce que**
le liant (16) est injecté notamment dans la zone d'extrémité inférieure (13) du moule (1).

11. Procédé selon l'une quelconque des revendications précédentes,
**caractérisé en ce qu'**
on injecte simultanément ou successivement plusieurs cavités (11) ou pièces (2) et celles-ci sont de préférence en position verticale, complètement entourées d'un liquide (26) dans un réservoir de pression (21) qui au moment de l'injection présente une pression (p_{F}) légèrement supérieure à la pression d'injection (p_{B}).

12. Procédé selon l'une quelconque des revendications précédentes,
**caractérisé en ce que**
le point d'injection est prévu de préférence au niveau de l'extrémité inférieure (13) de la face avant ou de la face arrière des moules (1) et la résine (16) remonte du bas dans la direction (x) des évents prévus.

13. Procédé selon l'une quelconque des revendications précédentes,
**caractérisé en ce que**
le milieu de pression (26) reste dans le réservoir de pression (21).

14. Procédé selon l'une quelconque des revendications précédentes,
**caractérisé en ce qu'**
avant l'injection, on introduit des fibres (28) et/ou des nappes de fibres et/ou des filets de fibres et/ou des corps en fibres dans le moule (1).

15. Procédé selon l'une quelconque des revendications précédentes,
**caractérisé en ce que**
plusieurs moules (1) sont installés dans une cuve de pression (21) notamment de manière parallèle les uns aux autres.

16. Procédé selon l'une quelconque des revendications précédentes,
**caractérisé en ce qu'**
avant l'opération d'injection on place des fibres dans le moule (1) pour réaliser une pièce moulée renforcée de fibres (2) avec la résine (16) injectée.

17. Procédé selon l'une quelconque des revendications précédentes,
**caractérisé en ce qu'**
avant ou pendant l'opération injection on mélange des fibres à la résine (16) pour réaliser une pièce de forme renforcée de fibres.

18. Dispositif pour la mise en oeuvre du procédé selon l'une des revendications précédentes, comportant un réservoir de pression (21), un liquide de pression (26) et un moule (1) installé dans le réservoir de pression (21),
**caractérisé en ce que**
la coquille supérieure (4) et/ou la coquille inférieure (5) du moule (1) sont réalisées en une matière élastique ou déformable notamment en matière plastique ou en métal.

19. Dispositif selon la revendication 18,
**caractérisé en ce que**
la coupelle supérieure (4) et/ou la coupelle inférieure (5) du moule (1) sont constituées chaque fois d'au moins une partie de coupelle, ces parties sont rendues étanches les unes par rapport aux autres par des joints.

20. Dispositif selon l'une des revendications 18 ou 19,
**caractérisé en ce que**
le moule (1) est aligné sensiblement verticalement dans le milieu de pression (26).
